# EUROPÄISCHE PATENTANMELDUNG

(11) **EP 1 235 287 A1**
(43) Veröffentlichungstag der Anmeldung: **28.08.2002**
(21) Anmeldenummer: 01104662.0
(22) Anmeldetag: 24.02.2001
(51) Int. Cl.: H01M 4/21

(54) **Reifung positiver Platten**

(71) Anmelder: Accumulatorenwerke Hoppecke Carl Zoellner & Sohn GmbH & Co. KG, 59929 Brilon (DE)
(72) Erfinder: Nitsche, Werner, Dr., 59558 Lippstadt (DE); Lahme, Norbert, 59929 Brilon (DE)
(74) Vertreter: Stenger, Watzke & Ring Patentanwälte

(57) **Zusammenfassung**

Die Erfindung betrifft ein Verfahren zur Schnellreifung von positiven Bleiakkumulatorenplatten, in welchem die Platten vereinzelt werden zum Beispiel, mittels einer Membran und für einen Zeitraum von weniger als 3 Stunden mit Wasserdampf behandelt werden, wobei die Reifung bei Umgebungstemperaturen von über 60°C erfolgt und bei der Reifung die Art der sich bildenden Bleisulfate kontrolliert wird. Dies wird beispielsweise dadurch erreicht, daß durch das Setzen von Impfkristallen kleinkristalline tetrabasische Bleisulfate gebildet werden oder durch die Zugabe eines Expanders die Bildung von tetrabasischen Bleisulfaten verhindert wird. Durch die Erfindung wird in vorteilhafter Weise ermöglicht, den gesamten Reifungsprozeß auf ca. 4h zu verkürzen und dadurch die Produktionskapazität einer Anlage zu steigern. Dadurch werden Plattenlager überflüssig und personalintensive Arbeiten entbehrlich,was die große Wirtschaftlichkeit des Verfahrens bedingt.

## Beschreibung

Die Erfindung betrifft ein Verfahren zur Reifung positiver Platten bei der Herstellung von Bleiakkumulatoren.

Die Herstellung von positiven Platten und deren Reifung erfolgt heute bislang fast ausschließlich in sogenannten Batch-Verfahren. Dabei erfordern es die herkömmlichen Verfahren, daß die positiven Platten bei der Reifung mehrstündig mit Wasserdampf bedampft werden, wobei der vollständige Reifeprozeß bis zu mehreren Tagen dauern kann. Die durch einen Produktionsprozeß kontinuierlich anfallenden Produkte werden dabei zunächst gesammelt und dann erst in einer Charge weiterverarbeitet. Dieses aufwendige und zeitintensive Reifungsverfahren steht den Bemühungen zur Automatisierung des Herstellungsverfahrens und zur Erreichung eines kontinuierlichen Fertigungsflusses von Bleiakkumulatoren entgegen.

Bei den herkömmlichen Verfahren ist es vonnöten, zwischen den einzelnen Verfahrensschritten Plattenlager aufzubauen. Die Einrichtung und Unterhaltung dieser Plattenlager ist kostenintensiv. Durch den langen Reifungsprozeß ist ferner eine Fertigungsflexibilität nicht gegeben, da die Herstellung der Platten viel Zeit in Anspruch nimmt und dadurch auf Typenänderungen nicht schnell und flexibel reagiert werden kann. Daher ist es unvorteilhafter Weise notwendig, unterschiedliche Typen in großer Anzahl auf Lager zu halten.

Eine weitere Schwierigkeit ist, daß bei den herkömmlichen Verfahren zur Reifung von positiven Platten grobkristalline tetrabasische Bleisulfate gebildet werden. Während des folgenden Formierprozesses der aktiven Massen sollen auch die tetrabasischen Bleisulfate in Bleidioxid umgewandelt werden. Liegen die tetrabasischen Bleisulfate jedoch in grobkristalliner Form vor, ist die Umwandlung in den geladenen Zustand mit Schwierigkeiten verbunden, da die grobkristallinen tetrabasischen Bleisulfate elektrochemisch nur schwer umgewandelt werden können. Es gibt Lösungsansätze im Stand der Technik, die dazu führen, daß überwiegend kleinkristalline tetrabasische Bleisulfate gebildet werden. Diese Verfahren erfordern jedoch eine erhöhte Sorgfalt und weisen ferner weiterhin den oben geschilderten Nachteil auf, daß die Reifung einen unvorteilhaft langen Zeitraum von bis zu mehreren Tagen in Anspruch nimmt. Bisherige Versuche, die Reifungsphase zu verkürzen, resultierten in der Gefahr, daß die späteren elektrischen Eigenschaften des Akkumulators erheblich beeinträchtigt werden können.

Daher liegt der Erfindung die **Aufgabe** zu Grunde, ein Verfahren zur Reifung von positiven Platten bereitzustellen, in welchem die positiven Platten in einem kontinuierlichen Fertigungsprozeß hergestellt werden können und bei welchem Ladungsschwierigkeiten der positiven Masse verhindert werden.

**Gelöst** wird diese Aufgabe, indem mit der Erfindung ein Verfahren zur Reifung von positiven Bleiakkumulatorenplatten bereitgestellt wird, in welchem die Platten vereinzelt werden und für einen Zeitraum von weniger als 3 Stunden mit Wasserdampf behandelt werden, wobei die Reifung bei Umgebungstemperaturen von über 60°C erfolgt und bei der Reifung die Art der sich bildenden Bleisulfate kontrolliert wird.

In vorteilhafter Weise ermöglicht es das erfindungsgemäße Verfahren, daß die Wasserdampfbehandlung nur für wenige Stunden erfolgen muß. Dies ist insbesondere darauf zurückzuführen, daß die Platten für den Reifungsprozeß vereinzelt werden. Mit der Erfindung wird vorgeschlagen, die Platten wenigstens während der Wasserdampfbehandlung zu vereinzeln. Dadurch wird in vorteilhafter Weise die optimale Reifung für jede Platte ermöglicht. Die Trennung und somit die Vereinzelung kann beispielsweise mittels einer klimawirksamen Membran erfolgen.

Dabei werden die Plattenoberflächen von der Membran abgedeckt, wobei diese aus Materialien besteht, welche die Feuchtigkeit transportieren und speichern und darüber hinaus die Plattenoberfläche gegen direkte Luftbewegung abschirmt. Dadurch wird direkt auf der Plattenoberfläche ein Mikroklima erzeugt, welches hinsichtlich Temperatur, Feuchtigkeitshaushalt und Luftbewegung exakt kontrollierbar und einstellbar ist. Diese Membran stellt in vorteilhafter Weise auch den Abstand zwischen den Oberflächen benachbarter Platten sicher, um somit eine ungehinderte Luftströmung zwischen den Platten sowie die ungehinderte Ausbildung gewünschter klimatischer Bedingungen zwischen den Platten sicher.

Als klimawirksame Membran können dabei beispielsweise Batterieseparatoren in Blatt- oder Taschenform verwendet werden. Dabei können diese z.B. aus einer PE-Folie gebildet werden. Diese kann beispielsweise ferner mit Kieselsäureeinlagerungen versehen werden, wodurch die PE-Folie hygroskopische Eigenschaften entwickelt.

Durch das vorteilhafte erfindungswesentliche Merkmal, daß die Platten vereinzelt werden, ist eine effektivere Bedampfung der einzelnen Platten möglich. Dies begünstigt die Tatsache, daß mit dem erfindungsgemäßen Verfahren der Bedampfungszeitraum erheblich verkürzt werden kann, wodurch der gesamte Reifungsprozeß in wenigen Stunden durchgeführt werden kann. Dadurch bewirkt das erfindungsgemäße Verfahren eine vorteilhafte Zeiteinsparung im Reifungsprozeß und wirkt sich günstig bei der Kontrolle auf die Bildung der Bleisulfate aus.

Erfindungsgemäß erfolgt der Reifungsprozeß bei einer Umgebungstemperatur von über 60°C. Besonders vorteilhaft für das erfindungsgemäße Verfahren haben sich Umgebungstemperaturen von über 80°C erwiesen. Jedoch sind teilweise auch geringere Temperaturen vorteilhaft, da über die Temperaturführung auch möglich ist, die Art der zu bildenden Bleisulfate zu kontrollieren. Durch Temperaturen von über 80°C wird der Reifungsprozeß jedoch beschleunigt.

Durch die Behandlung mit Wasserdampf wird die Massehaftung zwischen aktiver Masse und Gitter verbessert. Dies beruht primär darauf, daß er eine alkalische Umgebung mit erhöhter PbO-Bildungsrate erzeugt. Vorzugsweise werden positive Platten mit korrosionsbeständigen Gitterlegierungen, z.B. auf Basis von PbCa, PbSn sowie Weichblei, verwendet. Ferner wird durch den erfindungsgemäßen Einsatz des Wasserdampfs die Kristallbildungsgeschwindigkeit für die Reifung der Paste erhöht.

Ein erfindungswesentlicher Aspekt ist ferner, daß bei der Reifung die Art der sich bildenden Bleisulfate kontrolliert wird. Dieses Merkmal ermöglicht es in vorteilhafter Weise, daß das Verfahren so gesteuert werden kann, daß die Bildung von grobkristallinen tetrabasischen Bleisulfaten vermieden wird. Dadurch wird in vorteilhafter Weise die Gefahr von Ladungsschwierigkeiten bei der Formation umgangen.

Insgesamt ermöglicht es die Erfindung, die Reifung von positiven Platten auf ca. 4h zu verkürzen. Dies ermöglicht einen kontinuierlichen Fertigungsfluß und ermöglicht ferner eine hohe Fertigungsflexibilität sofern Typenänderungen auftreten. In vorteilhafter Weise ermöglicht es das erfindungsgemäße Verfahren aufgrund seiner außerordentlich kurzen Durchführungszeit, daß mehr Platten in einem Fertigungsprozeß fertiggestellt werden können. Dadurch wird die Produktionskapazität einer Anlage erheblich gesteigert. Durch das erfindungsgemäße Verfahren entfällt auch die Notwendigkeit für aufwendige Plattenlager. Darüber hinaus werden personalintensive Arbeiten entbehrlich. Mit dem erfindungsgemäßen Verfahren ist eine Satzreifung der positiven Platten möglich. Insgesamt ist das erfindungsgemäße Verfahren aufgrund seiner kurzen Durchführungszeit und aufgrund der kontinuierlichen Fertigung außerordentlich wirtschaftlich.

Insbesondere zwei Ausführungsformen des erfindungsgemäßen Verfahrens haben sich als vorteilhaft erwiesen, um bei der Reifung die Art der sich bildenden Bleisulfate zu kontrollieren.

Gemäß einer ersten Ausführungsform wird das Verfahren bei der Reifung derart gesteuert, daß tetrabasische Bleisulfate entstehen. In Anbetracht der Tatsache, daß die Bildung grobkristalliner tetrabasischer Bleisulfate ungünstig ist, wird vorgeschlagen, daß Verfahren so zu steuern, daß im wesentlichen nur kleinkristalline tetrabasische Bleisulfate gebildet werden.

Die Keimbildung der tetrabasischen Bleisulfate kann beispielsweise durch die Menge an Schwefelsäure in der Paste kontrolliert werden. So hat sich gezeigt, daß bei geringen Mengen an Schwefelsäure in der Paste die Keimbildung von tetrabasischen Bleisulfaten stark gehemmt ist, so daß nach einer Reifezeit unter Wasserdampf von ca. 1h zumeist nur tribasische Bleisulfate erzeugt werden.

Es wird daher vorgeschlagen, eine tetrabasische Bleisulfatstruktur durch das Setzten von Impfkristallen zu erhalten. Dabei sollte die Größe der Impfkristalle in einem Bereich von wenigen µm liegen, um die Bildung grobkristalliner tetrabasischer Bleisulfate zu vermeiden. Als besonders vorteilhaft hat sich dabei der Einsatz von Impfkristallen erwiesen, deren Größe in einem Bereich von kleiner/gleich 1µm liegt. Impfkristalle dieser Größe können beispieisweise durch Zerkleinern von größeren Kristallen gewonnen werden. So können tetrabasische Kristalle z.B. aus Fällreaktionen in Rührwerkskugelmühlen im Naßmahlverfahren mit beispielsweise Sand als Mahlmittel auf die erforderliche Größe zerkleinert werden. Diese Impfkristalle werden dann der positiven Paste zugegeben.

Aufgrund der geringen Säuremengen kann sich eine tetrabasische Bleisulfatstruktur nicht spontan und unkontrolliert ausbilden. Da jedoch gemäß vorliegender Ausführungsform Impfkristalle in die positive Paste eingebracht werden, wird der Kristallisationsprozeß an den Impfkristallen ermöglicht, wobei das eingebrachte Kriställchen als Kristallisationszentrum wirkt. In vorteilhafter Weise kann dadurch der Kristallisationsprozeß kontrolliert und beschleunigt werden, da aufgrund der geringen Säuremengen nur dort wo ein Impfkristall eingebracht wurde, ein tetrabasischer Bleisulfatkristall entsteht, wobei die Bildung durch den Impfkristall stark beschleunigt wird. In vorteilhafter Weise kann der Reifungsprozeß dadurch kontrolliert und stark verkürzt werden. Durch die Kontrolle des Kristallisationsprozesses wird erreicht, daß vornehmlich kleinkristalline tetrabasische Bleisulfate gebildet werden. Dadurch werden die Ladungseigenschaften der positiven Platte und somit die des Akkumulators verbessert.

Auch bei Verwendung von größeren Schwefelsäuremengen in der positiven Paste hat der Einsatz der Impfkristalle Vorteile, da auch hier die Bildung von kleinkristallinen tetrabasischen Bleisulfaten gefördert und beschleunigt wird.

Dadurch daß die Bildung der tetrabasischen Bleisulfate durch das Setzen von Impfkristallen stark beschleunigt wird, werden die kurzen Reifezeiten und die bevorzugte Entstehung von kleinkristallinen tetrabasischen Bleisulfaten gefördert.

Gemäß einer zweiten Ausführungsfom wird das Verfahren bei der Reifung derart gesteuert, daß die Bildung von tetrabasischen Bleisulfaten wenigstens teilweise verhindert und die Bildung von tribasischen Bleisulfaten gefördert wird. Dies kann wie oben geschildert beispielsweise durch Wahl der Säuremenge in der Paste erfolgen.

Es ist bekannt, daß bei negative Platten nach Dampfbehandlung tribasische Bleisulfate gebildet werden. Überraschender Weise hat sich gezeigt, daß die Spreizmittel aus der negativen Paste, die sogenannten Expander, die Bildung von tetrabasischen Bleisulfaten in der positiven Paste verhindern bzw. verzögern und dadurch die Bildung von tribasischen Bleisulfaten begünstigen. Daher wird vorgeschlagen, der positiven Paste einen Expander zuzugeben, um die Bildung von tetrabasischen Bleisulfaten im Reifezeitraum zu verhindern. Expander sind Zusatzstoffe aus organischen und/oder anorganischen Komponenten.

Die Hemmung der Keimbildung von tetrabasischen Bleisulfaten durch den Expander erfolgt in Abhängigkeit von seiner Konzentration. Die Menge an Expanderzusätzen ist allgemein in Abhängigkeit von der Dampfeinwirkzeit sowie der Menge der Schwefelsäure zu wählen, um den gewünschten Hemmungsgrad zu erzielen. Diese Bedingungen können auch die Wahl des jeweiligen Expanders beeinflussen. Dabei hat sich die Verwendung eines Ligninzusatzes als vorteilhaft erwiesen. Dies können beispielsweise Ligninsulfonsäuren oder desulfonierte Sulfonsäuren sein. Derartige Stoffe werden beispielsweise unter dem Namen Vanisperse gehandelt. Es können aber selbstverständlich auch andere Ligninderivate oder Huminsäuren verwendet werden.

Versuche mit Vanisperse als Expander haben gezeigt, daß bereits geringe Mengen des Spreizmittels den prozentualen Anteil von tetrabasischen Bleisulfaten stark absenken. So hat sich gezeigt, daß bereits die Zugabe von 0,05 Kg des Spreizmittels pro 100kg Staub den Anteil von tetrabasischen Bleisulfaten an den gebildeten Bleisulfaten insgesamt auf ca. 20% absenkt. Die Zugabe von 0,1 Kg Spreizmittel pro 100kg Staub führte sogar zu prozentualen Anteilen von tetrabasischen Bleisulfaten von unter 5%. Diese Untersuchungen zeigen, daß bereits geringe Mengen des Spreizmittels die Bildung von tetrabasischen Bleisulfaten fast vollständig hemmen, so daß überwiegend tribasische Bleisulfate gebildet werden. Aufgrund der Untersuchungen liegt die Menge an Spreizmittel, die wenigstens hinzugegeben werden muß, um eine ausreichende Hemmung der tetrabasischen Bleisulfatbildung zu erzielen, bei ca. 0,02 Kg bis 0,2 Kg pro 100kg Staub.

Der Einsatz von Ligninen bzw. Ligninderivaten als Expander ist auch unter dem Aspekt besonders vorteilhaft, daß die Lignine während des Formationsprozesses oxidativ zerstört werden. Ein Nachweis in der formierten Batterie ist-nicht möglich und somit hat der Zusatz von Lignin bzw. Ligninderivaten keine nachteiligen Einflüsse auf die Batterie, so daß keine nachteiligen Eigenschaften bekannt sind. Bereits bei einem sehr geringen Ligninderivatanteil zeigt sich eine fast vollständige Hemmung der tetrabasischen Bleisulfatkeimbildung.

Da der Zusatz des Ligninderivats die Pastenkonsistenz beeinflussen kann, wird ferner vorgeschlagen, der Paste NaOH und/oder Na₂SO₄ hinzuzugeben. Dadurch kann in vorteilhafter Weise die Festigkeit der Paste kontrolliert werden. Dabei muß die Menge an NaOH und/oder Na₂SO₄ so gewählt werden, daß die erwünschte Festigkeit erzielt wird. Die Zugabe von NaOH und/oder Na₂SO₄ hat keinen wesentlichen Einfluß auf die Wirkung des Ligninderivats.

Mit der Erfindung wird vorgeschlagen, die Wasserdampfbehandlung für weniger als 3 Stunden vorzunehmen. Vorzugsweise erfolgt die Bedampfung für einen Zeitraum von ca. 1h. Diese Zeitangabe ist nur als Richtwert aufzufassen und kann in Abhängigkeit von anderen Bedingungen, wie beispielsweise Menge und Art des zugesetzten Expanders sowie der Menge an Schwefelsäure in der Paste variieren. Derartig kurze Bedampfungszeiträume werden jedoch durch das erfindungsgemäße Verfahren ermöglicht, sind aber keine zwingende Voraussetzung.

Insgesamt ist es möglich, mit dem erfindungsgemäßen Verfahren die Schnellreifung und Trocknung der positiven Platten innerhalb von vier Stunden durchzuführen. Dabei werden die vereinzelten Platten bei Umgebungstemperaturen von über 80°C und hoher Luftfeuchte für eine Stunde mit Dampf behandelt. Im Anschluß daran erfolgt ein Vortrocknungsprozeß, in welchem das freie Blei in der pastösen Masse der Platten reduziert wird. Dieser Metallabbau erfolgt vorzugsweise für einem Zeitraum von zweieinhalb Stunden. dabei sind Umgebungstemperaturen zwischen 50 und 80°C vorteilhaft. Umluftströmung und Temperatur sollten vorzugsweise so aufeinander abgestimmt sein, daß der Feuchtigkeitsgehalt in den Pasten von ca. 9-10% auch ca. 4% langsam abfällt. An diese Phase schließt sich eine Endtrocknungsphase von ca. einer halben Stunde. Dafür wird eine Temperatur von vorzugsweise 80°C eingestellt und eine an den Platten vorbeilaufende Luftströmung erzeugt. Dabei wird bevorzugter Weise wenigstens in der Phase der Endtrocknung Luftströmungen gerichtet durchzuführen, so daß die Luft direkt an den Oberflächen bzw. den Membranen entlangströmt.

Das erfindungsgemäße Verfahren kann insbesondere für die Herstellung von Starterbatterien eingesetzt werden, sowie bei der Herstellung von positiven Rohrplatten zwecks Formationszeitverkürzung angewendet werden. Diese Angaben bezüglich der Anwendungsgebiete sind nicht beschränkend.

## Patentansprüche

1. Verfahren zur Reifung von positiven Bleiakkumulatorenplatten,
**dadurch gekennzeichnet,**
**daß** die Platten vereinzelt werden und für einen Zeitraum von weniger als 3 Stunden mit Wasserdampf behandelt werden, wobei die Reifung bei Umgebungstemperaturen von über 60°C erfolgt und bei der Reifung die Art der sich bildenden Bleisulfate kontrolliert wird.

2. Verfahren nach Anspruch 1, **dadurch gekennzeichnet, daß** die Reifung bei Umgebungstemperaturen von über ca. 80°C erfolgt.

3. Verfahren nach Anspruch 1 oder 2, **dadurch gekennzeichnet, daß** die Behandlung mit Wasserdampf für einen Zeitraum von ca. 1 Stunde erfolgt.

4. Verfahren nach einem oder mehreren der Ansprüche 1 bis 3, **dadurch gekennzeichnet, daß** die Vereinzelung der Platten durch Trennung der Platten mittels einer Klimamembran erfolgt.

5. Verfahren nach einem oder mehreren der Ansprüche 1 bis 4, **dadurch gekennzeichnet, daß** die Reifung in einem kontinuierlichen Reifungsprozeß erfolgt.

6. Verfahren nach einem oder mehreren der Ansprüche 1 bis 5, **dadurch gekennzeichnet, daß** die Keimbildung von tetrabasischen Bleisulfate durch die Menge an Schwefelsäure in der Paste kontrolliert wird.

7. Verfahren nach einem oder mehreren der Ansprüche 1 bis 6, **dadurch gekennzeichnet, daß** der positiven Paste geringe Säuremengen zugegeben werden, wobei die zugesetzte Menge unterhalb von ca. 4-6l Schwefelsäure der Dichte 1,40 g/ml pro 100kg Staub liegt.

8. Verfahren nach einem oder mehreren der Ansprüche 1 bis 7, **dadurch gekennzeichnet, daß** der positiven Paste tetrabasische Bleisulfatimpfkristalle zugegeben werden, wobei die Größe der Impfkristalle in einem Bereich von wenigen µm liegt.

9. Verfahren nach einem oder mehreren der Ansprüche 1 bis 8, **dadurch gekennzeichnet, daß** Impfkristalle mit einer Kristallgröße von kleiner gleich 1 µm verwendet werden.

10. Verfahren nach einem oder mehreren der Ansprüche 1 bis 9, **dadurch gekennzeichnet, daß** die Impfkristalle erforderlicher Größe durch Zerkleinern von größeren Kristallen erzeugt werden.

11. Verfahren nach einem oder mehreren der Ansprüche 1 bis-10, **dadurch gekennzeichnet, daß** die Reifung so gesteuert wird, daß die Bildung von tetrabasischen Bleisulfaten im wesentlichen verhindert wird und die Bildung von tribasischen Bleisulfaten gefördert wird.

12. Verfahren nach einem oder mehreren der Ansprüche 1 bis 11, **dadurch gekennzeichnet, daß** der positiven Paste Zusätze zugegeben werden, welche die Ausbildung von tetrabasischen Bleisulfaten im Bedampfungszeitraum verzögern und/oder verhindern.

13. Verfahren nach einem oder mehreren der Ansprüche 1 bis 12, **dadurch gekennzeichnet, daß** die Zusatzmenge in Abhängigkeit von der Dampfeinwirkzeit sowie der Menge an Schwefelsäure in der Paste gewählt wird.

14. Verfahren nach einem oder mehreren der Ansprüche 1 bis 13, **dadurch gekennzeichnet, daß** der positiven Paste als Zusatz ein Expander, vorzugsweise Lignin, ein Ligninderivat und/oder Huminsäuren, zugegeben wird.
